# EUROPÄISCHE PATENTSCHRIFT

(11) **EP 2 453 147 B1**
(45) Veröffentlichungstag und Bekanntmachung des Hinweises auf die Patenterteilung: **27.03.2019**
(21) Anmeldenummer: 11007595.9
(22) Anmeldetag: 19.09.2011
(51) Int. Cl.: F16H 59/04, F16H 61/36

(54) **Schalthebeleinheit**
Gear shift unit
Unité de levier de commande

(30) Priorität: 12.11.2010 DE 102010051074
(43) Veröffentlichungstag der Anmeldung: 16.05.2012
(73) Patentinhaber: Dura Automotive Systems Einbeck GmbH, 37574 Einbeck (DE)
(72) Erfinder: Grude, Ingo, 37643 Negenborn (DE)
(74) Vertreter: Sobisch, Peter

(56) Entgegenhaltungen:
- EP-A1- 0 748 964
- EP-A1- 0 792 768
- EP-A2- 2 441 983
- DE-A1-102007 005 496
- DE-B3- 10 229 059
- US-A- 5 287 743

## Beschreibung

Die Erfindung bezieht sich auf iene Schalthebeleinheit entsprechend dem Oberbegriff des Anspruchs 1.

Eine solche Schalthebeleinheit besteht aus einem Schaltgehäuse, in dem ein im Einbauzustand in den Fahrgastraum hineinragender Handschalthebel zur Darstellung von Wähl- und Schaltbewegungen über ein Kugelgelenk schwenkbar gelagert ist, wobei diese Bewegungen durch einen Übertragungsmechanismus ausgangsseitig in Zug- und Druckbewegungen umgesetzt werden, die jeweils auf einen Seilzug übertragen werden, der seinerseits mit entsprechenden Eingangselementen des zu schaltenden Fahrzeuggetriebes in Verbindung steht.

Eine solche Schalthebeleinheit ist beispielsweise aus dem Dokument DE 198 17 166 A1 bekannt und besteht aus einem bodenseitig zu fixierenden Gehäuse, in dem um eine erste Achse eine Rahmeneinheit schwenkbar gelagert ist, wobei in dieser Rahmeneinheit um eine zweite, sich senkrecht zu der ersten Achse erstreckende Achse ein Handschalthebel schwenkbar gelagert ist. Die Schwenkbewegung des Handschalthebels um die genannte zweite Achse wird über ein an diesem angeformtes Ansatzteil unmittelbar in eine auf einen ersten Seilzug zu übertragende Schaltbewegung umgesetzt. Die über den Handschalthebel unter Mitnahme der Rahmeneinheit eingeleitete Schwenkbewegung um die erste Achse wird mittels eines um eine sich parallel zu der zweiten Achse erstreckende Achse drehbar gelagerten Wählwinkels in eine auf einen zweiten Seilzug zu übertragende Wählbewegung umgesetzt. Dieser Wählwinkel wird durch ein winkelartiges, etwa mittig gelagertes Bauteil gebildet, an dessen einem Ende der genannte zweite Seilzug angeschlossen ist und an dessen anderes Ende über einen Mitnahmekörper mit der Rahmeneinheit kinematisch gekoppelt ist. Beide Seilzüge erstrecken sich parallel zueinander.

Es ist im Hause der Anmelderin bekannt, das Schaltgehäuse der Schalthebeleinheit dahingehend auszubilden, dass der Wählwinkel auf einer Welle angeordnet ist, die auf der Oberseite des Schaltgehäuses gelagert ist, und zwar mit der Maßgabe, dass der eine Schenkel des Wählwinkels zwecks Anbindung eines Seilzuges durch eine Ausnehmung hindurch in das Schaltgehäuse hineinragt, wohingegen das Ende des anderen Schenkels außerhalb des Schaltgehäuses mit dem Handschalthebel in Wirkverbindung steht. Auch aufgrund der räumlich beengten Einbauverhältnisse erfordert diese Ausführungsform beim Einbau eine bestimmte Montagereihenfolge, wonach zunächst der Wählwinkel vertikal in die Ausnehmung eingesetzt wird und anschließend in horizontaler Richtung die genannte Welle eingesetzt und mit dem Wählwinkel verbunden wird. Diese sich aus der bekannten Struktur der Welle und deren Lagerung ergebende Arbeitsweise gestaltet sich jedoch vergleichsweise aufwändig und verursacht nicht unerhebliche Montagekosten.

Eine gattungsgemäße Schalthebeleinheit ist aus der DE 10 2007 005 496 A1 bekannt. Eine weitere Schalthebeleinheit ist aus dem nicht vorveröffentlichen Dokument EP 2 441 983 A2 bekannt. Hierbei ist eine, mit dem Wählhebel in Verbindung stehende Welle vorgesehen, die in eine Buchse einsetzbar ist, die vertikal in eine, einen Bestandteil des Schaltgehäuses bildende oberseitig offene Aufnahme einsetzbar ist.

Es ist vor diesem Hintergrund die Aufgabe der Erfindung, eine Schalthebeleinheit der eingangs bezeichneten Art mit Hinblick auf einen konstruktiv einfacheren Aufbau bei gleichzeitig verbesserten Montagemöglichkeiten hin auszugestalten. Gelöst ist diese Aufgabe bei einer solchen Schalthebeleinheit durch die Merkmale bes Kennzeichnungsteils des Anspruchs 1.

Ausgangspunkt ist eine Auf- oder auch an dem Schaltgehäuse angeordnete, oberseitig offene, z.B. im Querschnitt halbkreisförmige Aufnahme, welche im einfachsten Fall nach Art einer längsgeteilten Lagerschale ausgebildet sein kann. Auf diese Weise ist im Vergleich zu einem Stand der Technik, bei welchem der Wählwinkel und die diesen lagernde Welle getrennt zu montieren sowie miteinander zu verbinden sind, eine einfachere Montagemöglichkeit dargestellt. Die Verbindung des Wählwinkels mit der genannten Welle kann beliebig ausgestaltet sein, insbesondere können beide Komponenten dauerhaft miteinander verbunden bzw. in eine einstückigen Baugruppe zusammengefasst sein. Es ist eine Buchse vorgesehen, in der die Welle zu lagern ist, wobei diese Buchse ihrerseits in die Aufnahme einzusetzen ist und wobei die Buchse horizontal über die sich in der Aufnahme befindliche Welle geschoben wird.

Die Merkmale des Anspruchs 2 sind auf die Fixierung der Buchse in der Aufnahme gerichtet, wobei anstelle der erwähnten Nuten in Verbindung mit den Leisten auch beliebige sonstige, formschlüssig in vertikaler Richtung wirksame Funktionselemente eingesetzt werden können, die geeignet sind, eine zuverlässige Fixierung der Buchse zu sichern.

Der Erfindungsgegenstand ist grundsätzlich bei allen Arten einer Handschalthebellagerung anwendbar, insbesondere entsprechend den Merkmalen des Anspruchs 3 bei einer solchen zum Schalten eines Fahrzeugwechselgetriebes, bei welcher neben den Wähl- auch Schalbewegungen darstellbar sind. Eine Anwendung kommt jedoch grundsätzlich auch dann in Betracht, wenn lediglich Wählbewegungen darzustellen sind.

Zur Lagerung der Welle ist entsprechend den Merkmalen des Anspruchs 4 ein Lagergehäuse vorgesehen, welches die oberseitig offene Aufnahme trägt und außenseitig an dem Schaltgehäuse, insbesondere oberseitig an diesem angebracht ist.

Die Erfindung wird im Folgenden unter Bezugnahme auf die Zeichnungen näher erläutert werden. Es zeigen:
Fig. 1 eine perspektivische Ansicht einer dem Stand der Technik entsprechenden Schalthebeleinheit;
Fig. 2 eine perspektivische Ansicht einer erfindungsgemäßen Schalteinheit.

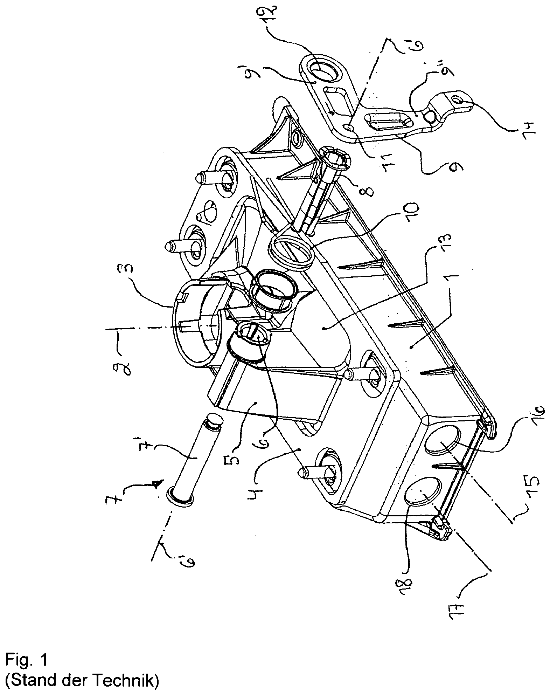

Anhand der Fig. 1 wird zunächst eine bekannte Ausführungsform einer Schalthebeleinheit beschrieben werden.

Mit 1 ist ein Schaltgehäuse bezeichnet, welches bodenseitig zur Anbindung an Strukturen eines Fahrzeugs bestimmt ist. Das Schaltgehäuse 1 umgrenzt einen Raum, in dem ein angedeuteter Handschalthebel 2 zumindest um zwei zueinander senkrechte Achsen, nämlich eine Wählachse und Schaltachse schwenkbar gelagert ist, der sich durch einen domartigen Aufbau 3 auf dessen Oberseite 4 hindurch erstreckt.

Ebenfalls ausgehend von der Oberseite 4 erstreckt sich ein Lagergehäuse 5 mit einer Bohrung 6, welche dazu bestimmt ist, eine sich in Richtung einer Achse 6' erstreckende Welle 7 aufzunehmen, die aus einem Wellenabschnitt 7' und einer Haltemuffe 8 besteht. Diese Welle 7 dient der Lagerung eines Wählwinkels 9, dessen Drehwinkelstellung in einer Ausgangslage durch eine Feder 10 gesichert ist. Zur Lagerung des Wählwinkels 9 auf der Welle 7 dient dessen sich in einem etwa mittleren Bereich befindliche Bohrung 11.

Die Welle 7 erstreckt sich parallel zu der Schaltachse, um die der Handschalthebel 2 zur Übertragung von Schaltbewegungen schwenkbar ist. Dementsprechend erstreckt sich die Achse, um die der Handschalthebel 2 zur Übertragung von Wählbewegungen schwenkbar ist, senkrecht zu der Schaltachse. Dementsprechend ist der Wählwinkel 9 in einer Ebene senkrecht zu der Achse 6' der Welle 7 schwenkbar.

Der Wählwinkel 9 steht über die sich an dem Ende seines einen Schenkels 9' befindliche Bohrung 12 in an sich bekannter Weise im Eingriff mit einem Mitnahmeelement des Handschalthebels 2, so dass ein Schwenkung des Hebels um die Wählachse eine entsprechende Schwenkung des Wählwinkels 9 nach sich zieht.

Im montierten Zustand erstreckt sich der, der Bohrung 12 abgekehrte Schenkel 9" des Wählwinkels 9 durch eine Ausnehmung 13 des Schaltgehäuses 1 hindurch und steht über seine Bohrung 14 am Ende dieses Schenkels 9" mit einem zur Übertragung von Wählbewegungen bestimmten Seilzug 15 in Verbindung, der durch eine Bohrung 16 des Schaltgehäuses hindurchgeführt ist. Mit 17 ist ein zur Übertragung von Schaltbewegungen bestimmter Seilzug bezeichnet, der sich parallel zu dem Seilzug 15 erstreckt und durch eine Bohrung 18 des Schaltgehäuses hindurchgeführt ist.

Zur Montage eines derart konzipierten Systems von Wählwinkel 9 und zugehöriger Welle 7 muss zunächst der Wählwinkel 9 vertikal in die Ausnehmung 13 eingesetzt und montiert werden. Anschließend muss die Welle 7 horizontal in die Bohrung 6 des Lagergehäuses 5 eingeschoben und mit dem Wählwinkel 9 verbunden werden. Dieser Vorgang gestaltet sich vergleichsweise aufwändig und wird außerdem durch die insbesondere seitlich häufig eingeengten Einbauverhältnisse erschwert.

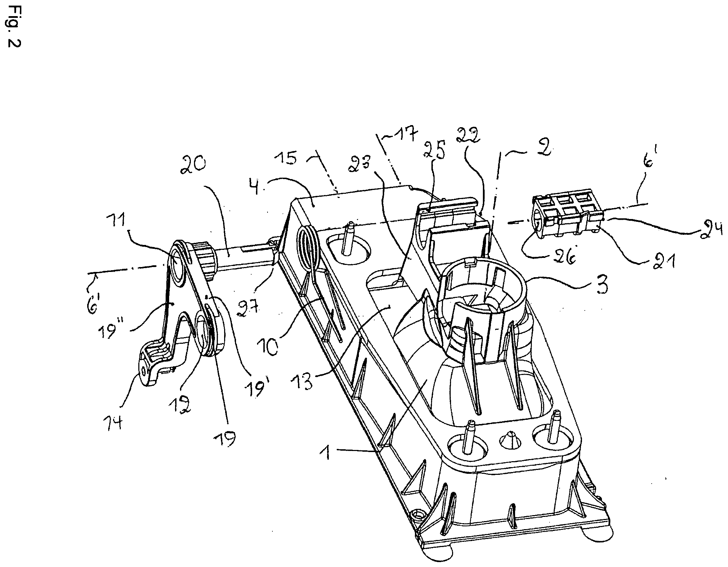

Eine erfindungsgemäße Ausführungsform einer Schalthebeleinheit wird im Folgenden unter Bezugnahme auf Fig. 2 beschrieben werden, wobei Funktionselemente, die mit denjenigen der Fig. 1 übereinstimmen, entsprechend bezeichnet sind, so dass auf eine diesbezügliche wiederholte Beschreibung verzichtet werden kann.

Mit modifizierter 19 ist ein Wählwinkel bezeichnet, der einstückig mit einer Welle 20 ausgebildet ist. Der Wählwinkel 19 steht wiederum über die sich an dem Ende des einen Schenkels 19' befindliche Bohrung 12 mit einem Mitnahmeelement des Handschalthebels 2 in Verbindung.

Mit 21 ist eine Buchse bezeichnet, welche zum Einsetzen in die oberseitig offene Aufnahme 22 eines Lagergehäuses 23 bestimmt ist, wobei eine Fixierung der Buchse 21 innerhalb der Aufnahme 22 in vertikaler Richtung beispielsweise durch Leisten 24 darstellbar ist, die zum Einschieben in zueinander parallele Nuten 25 der Aufnahme 22 bestimmt und eingerichtet sind. Eine Fixierung der Buchse 21 in axialer Richtung kann in beliebiger, dem Fachmann geläufiger Weise erfolgen. Auch können anstelle der Elementenpaarung Leiste 24 / Nut 25 beliebige andere formschlüssig wirksame Befestigungsmittel vorgesehen sein.

Die Buchse 21 weist eine zur Aufnahme der Welle 20 bestimmte Bohrung 26 auf und es ist die Welle 20 an ihrem dem Wählwinkel 19 abgekehrten Ende mit formschlüssig wirksamen Rasthaken 27 ausgerüstet, die eine axiale Fixierung an der Buchse 21 ermöglichen.

Eine derart konzipierte Schalthebeleinheit ermöglicht eine vereinfachte Montage des Wählwinkels 19 insoweit als in einem ersten Schritt der Wählwinkel 19, nämlich dessen die Bohrung 14 tragender Schenkel 19" vertikal in die Ausnehmung 13 des Schaltgehäuses 1 eingesetzt und montiert wird. In dieser Lage erstreckt sich somit die Welle 20 bereits innerhalb der Aufnahme 22. Anschließend wird die Buchse 21 in die Aufnahme 22 horizontal eingeführt und hierbei mit ihrer Bohrung 26 über die Welle 20 geschoben, womit die Montage des Wählwinkels 19 komplettiert ist.

Man erkennt, dass der wesentliche Vorteil gegenüber dem eingangs vorgestellten Stand der Technik in dem Fortfall eines Montageschrittes besteht, nämlich in dem Fortfall der Herstellung einer Verbindung zwischen dem Wählwinkel 19 und der Welle 20, so dass in Verbindung mit der oberseitig offenen Aufnahme 19 weiterhin in einem seitlich beengten Raum eine vertikale Montage des Wählwinkels 19 ermöglicht wird.

### Bezugszeichenliste:

- 1.: Schaltgehäuse
- 2.: Handschalthebel
- 3.: Aufbau
- 4.: Oberseite
- 5.: Lagergehäuse
- 6.: Bohrung
- 6'.: Achse
- 7.: Welle
- 7'.: Wellenabschnitt
- 8.: Haltemuffe
- 9.: Wählwinkel
- 9.: Schenkel
- 9".: Schenkel
- 10.: Feder
- 11.: Bohrung
- 12.: Bohrung
- 13.: Ausnehmung
- 14.: Bohrung
- 15.: Seilzug
- 16.: Bohrung
- 17.: Seilzug
- 18.: Bohrung
- 19.: Wählwinkel
- 19'.: Schenkel
- 19".: Schenkel
- 20.: Welle
- 21.: Buchse
- 22.: Aufnahme
- 23.: Lagergehäuse
- 24.: Leiste
- 25.: Nut
- 26.: Bohrung

## Patentansprüche

1. Schalthebeleinheit mit einem Schaltgehäuse (1), in dem ein Handschalthebel (2) zumindest um eine, zur Übertragung von Wählbewegungen bestimmte Wählachse schwenkbar gelagert ist, mit einem, zur Übertragung der Wählbewegungen auf ein Fahrzeuggetriebe eingerichteten, um eine sich senkrecht zu der Wählachse erstreckende Achse (6') schwenkbar an dem Schaltgehäuse (1) gelagerten Wählwinkels (19), dessen einer Schenkel (19") sich durch eine Ausnehmung (13) hindurch vertikal in das Schaltgehäuse (1) hinein erstreckt, **dadurch gekennzeichnet, dass** auf der Oberseite (4) des Schaltgehäuses (1) eine oberseitig offene Aufnahme (22) angeordnet ist, wobei der Wählwinkel (19) zusammenhängend mit einer diesen in einer Aufnahme (22) lagernden Welle (20) ausgebildet ist, wobei eine zur Lagerung der Welle (20) bestimmte, in die Aufnahme (22) einsetzbare und in dieser fixierbare Buchse (21) vorgesehen ist, und wobei die Buchse (21) horizontal in die Aufnahme (22) einschiebbar und in dieser fixierbar ist.

2. Schalthebel nach Anspruch 1, **dadurch gekennzeichnet, dass** die Buchse (21) mit seitlich angeformten zum Einschieben in Nuten (25) der Aufnahme (22) bestimmten Leisten versehen ist.

3. Schalthebeleinheit nach Anspruch 1 oder 2, **dadurch gekennzeichnet, dass** der Handschalthebel (2) in an sich bekannter Weise in dem Schaltgehäuse (1) ferner um eine sich senkrecht zu der Wählachse erstreckende, zur Übertragung von Schaltbewegungen bestimmte Schaltachse schwenkbar gelagert ist.

4. Schalthebeleinheit nach einem der Ansprüche 1 bis 3, **gekennzeichnet durch** ein außenseitig an dem Schaltgehäuse (1) angeordnetes Lagergehäuse (23), welches die oberseitig offene Aufnahme (22) trägt.

## Claims

1. Gearshift lever unit comprising a gearshift housing (1), in which a manual gearshift lever (2) is mounted such that it can be pivoted at least about a selection axis intended for transmitting selection movements, comprising a selection bracket (19) which is arranged for transmitting the selection movements to a vehicle transmission, is mounted on the gearshift housing (1) such that it can be pivoted about an axis (6') extending perpendicularly to the selection axis and has one limb (19") extending through an aperture (13) vertically into the gearshift housing (1), **characterised in that** a receiver (22) which is open on the top side is arranged on the top side (4) of the gearshift housing (1), wherein the selection bracket (19) is formed connectedly with a shaft (20) supporting said bracket in a receiver (22), wherein a bushing (21) is provided which is intended to support the shaft (20), can be inserted into the receiver (22) and can be fixed therein, and wherein the bushing (21) can be pushed horizontally into the receiver (22) and can be fixed therein.

2. Gearshift lever as claimed in claim 1, **characterised in that** the bushing (21) is provided with laterally formed strips intended to be pushed into grooves (25) of the receiver (22).

3. Gearshift lever unit as claimed in claim 1 or 2, **characterised in that** the manual gearshift lever (2) is mounted in a manner known *per se* in the gearshift housing (1) such that it can also be pivoted about a gearshift axis which extends perpendicularly to the selection axis and is intended to transmit gearshift movements.

4. Gearshift lever unit as claimed in any one of claims 1 to 3, **characterised by** a bearing housing (23) which is arranged on the outer side of the gearshift housing (1) and carries the receiver (22) which is open at the top side.

## Revendications

1. Unité de levier de commande avec un boîtier de commande (1), dans lequel un levier de commande manuel (2) est monté de façon à pouvoir pivoter au moins autour d'un axe de sélection destiné à la transmission de mouvements de sélection, avec un angle de sélection (19) agencé pour la transmission des mouvements de sélection sur une boîte de vitesse de véhicule, monté au niveau du boîtier de commande (1) de façon à pouvoir pivoter autour d'un axe (6') s'étendant perpendiculairement à l'axe de sélection, dont une branche (19") s'étend verticalement au travers d'un évidement (13) dans le boîtier de commande (1), **caractérisée en ce que**, sur le côté supérieur (4) du boîtier de commande (1), est disposé un logement (22) ouvert du côté supérieur, dans laquelle l'angle de sélection (19) est réalisé d'un seul tenant avec un arbre (20) logeant celui-ci dans un logement (22), dans laquelle une douille (21) destinée au montage de l'arbre (20), pouvant être introduite dans le logement (22) et pouvant être fixée dans celui-ci est prévue, et dans laquelle la douille (21) peut être insérée horizontalement dans le logement (22) et peut être fixée dans celui-ci.

2. Levier de commande selon la revendication 1, **caractérisé en ce que** la douille (21) est dotée de barres formées latéralement destinées à l'insertion dans des rainures (25) du logement (22).

3. Unité de levier de commande selon la revendication 1 ou 2, **caractérisée en ce que** le levier de commande manuel (2) est monté en outre, d'une manière connue en soi, dans le boîtier de commande (1) de façon à pouvoir pivoter autour d'un axe de commande s'étendant perpendiculairement à l'axe de sélection, destiné à la transmission de mouvements de commande.

4. Unité de levier de commande selon l'une quelconque des revendications 1 à 3, **caractérisée par** un boîtier de palier (23) disposé du côté extérieur au niveau du boîtier de commande (1), qui porte le logement (22) ouvert du côté supérieur.
